# EUROPEAN PATENT SPECIFICATION

(11) **EP 1 618 788 B1**
(45) Date of publication and mention of the grant of the patent: **22.08.2007**
(21) Application number: 05388060.5
(22) Date of filing: 21.07.2005
(51) Int. Cl.: A22B 1/00, A22B 3/00

(54) **An arrangement for fixing an animal in a shooting box**
Vorrichtung zum Festhalten von einem Tier in einer Schlachtbox
Dispositif pour maintenir un animal dans une cage de boucherie

(30) Priority: 22.07.2004 DK 200401137
(43) Date of publication of application: 25.01.2006
(73) Proprietor: Slagteriernes Forskningsinstitut, DK-4000 Roskilde (DK)
(72) Inventor: Christensen, Leif, 3500 Vaerlose (DK)
(74) Representative: Larsen, Hans Ole

(56) References cited:
- WO-A-03/047355
- US-A- 4 748 719
- US-B1- 6 537 145

## Description

The invention relates to an arrangement for fixing an animal in a shooting or stunning box in which the neck of the animal is fixed between two movable hoops which, during the fixation, together define an opening between them for holding the neck.

Such an arrangement is known from WO 03/047355, which describes a stunning system with a driving gate, which stops automatically when the animal has been placed with the neck area at the hoops. The gate may e.g. be stopped when it has reached a position selected by the operator on the basis of the size of the animal. Stopping causes the motor arrangement of the hoops to be activated, which brings the hoops to a fixing position. The operator may select the type of slaughter animal with a size corresponding to the animal concerned by means of e.g. a keyboard and thereby cause stopping of the gate in a position which is optimum for the fixation of the animal by means of the hoops.

In this and similar systems, an opening for the neck of the animal is defined in the fixed position between the hoops, which does not change irrespective of the size of the animal.

This means that, in many cases, the animal will be able to move its head, which makes it difficult for the operator to place the bolt gun, whereby the shooting/stunning accuracy may be reduced.

Accordingly, an object of the invention is to provide an arrangement where the shooting/stunning process may be performed more safely and rapidly.

The object of the invention is achieved by an arrangement of the type defined in the introductory portion of claim 1, which is characterized in that the hoops are adjustable by their respective drive means to one of several predetermined lateral active holding positions to define one of various sizes of openings for holding the neck between the hoops.

In this way, the size of the opening between the hoops may be adjusted to size of the animal concerned, such that it is not possible for the animal to move its head in a way that impedes correct stunning/shooting. The adjustment may be established in that an operator operates a keyboard in dependence on the size of the animal concerned, which, in systems of the structure described in the above-mentioned WO 03/047355, may be the same adjustment as the one which determines the stop position of the driving gate in the box for the fixation of the animal by means of the hoops, or the adjustment may be established by automatic means which record the size of the animal (by video, by weighing in a box or the like) or e.g. the width of the neck at the hoops.

When the hoops are provided with their respective drive means, it is possible in practice to adjust the hoops automatically, as stated in claim 2, in that the hoops are adjusted to a specific lateral position on the basis of a signal from a controller, said signal being indicative of the size of the animal, and it is possible to make the hoops mutually independent so that the hoop at the fall-out side of the box may be caused to assume a position which does not interfere with the fall-out of the stunned animal from the stunning box after this side has been opened.

Expediently, as stated in claim 3, it is an advantage that the hoops are pivotally secured to their respective ones of the side walls of the stunning box, thereby facilitating the adjustment of the size of the opening and the fall-out of the stunned animal.

It is preferred in this connection, as stated in claim 4, that one side wall of the stunning box is formed by a gate which may be raised for the fall-out of a stunned animal. The corresponding hoop is then raised together with the gate.

To additionally ensure that the animal is quite calm before the stunning/killing takes place, it is an advantage, as stated in claim 5, that a support plate for the head of the animal is provided in the area in front of the movable hoops where the head of the animal is present during the fixation.

This advantage may be enhanced additionally, if, as stated in claim 6, the support plate is adjustable in the height, preferably to one of several predetermined positions.

After the animal has been killed and falls down on the floor of the shooting box, it is expedient if, as stated in claim 7, a transverse inclined sliding face is arranged behind the movable hoops, where the inclination of the sliding face has a direction toward a gate through which the animal, after having been killed/stunned, is to fall out, said inclined sliding face being configured as a hoop in the form of a frame which is formed by two vertical posts connected at the top with an inclined crossbar.

Hereby, the animal will not fall forwards or inwards against the fixed wall in the shooting box.

When, as stated in claim 8, the floor in the box may be caused to assume an inclined position, where the inclination has a direction extending from a position above the foot of the one side wall, which is fixed, and down to the foot of the other side wall, which is formed by a gate, it is ensured that the animal falls to the correct side for chaining.

In order to ensure that the animal lands correctly outside the box (i.e. readily accessible for chaining), it is advantageous if, as stated in claim 9, a longitudinal strip, preferably made of plastics, is arranged below the foot of the other side wall.

When adjusting the opening between the hoops and the height of the adjustment plate, it is expedient if, as stated in claim 10, the predetermined positions of the movable hoops are provided by means of several sensors, which, when they receive a signal from a signal generator, may be set in a state in which they are adapted to stop the drive means of the movable hoops, and, as stated in claim 11, that the positions of the support plate are provided by sensors, which, when they receive a signal from a signal generator, may be set in a state in which they are adapted to stop the movement of the support plate.

In order to achieve an optimum fixation of the head of the animal, it is advantageous if, as stated in claim 12, the adjustments of the positions of the hoops and of the positions of the support plate are interrelated such that a given position of a movable hoop will automatically cause automatic adjustment to a given position of the support plate.

The invention will now be explained more fully with reference to the drawing, in which
- fig. 1: shows a shooting box according to the invention, seen from above,
- fig. 2: shows the shooting box, seen from the left along the section A-A,
- fig. 3: shows parts of the shooting box in perspective, while
- fig. 4: shows parts of the shooting box of fig. 3 in perspective and on a larger scale.

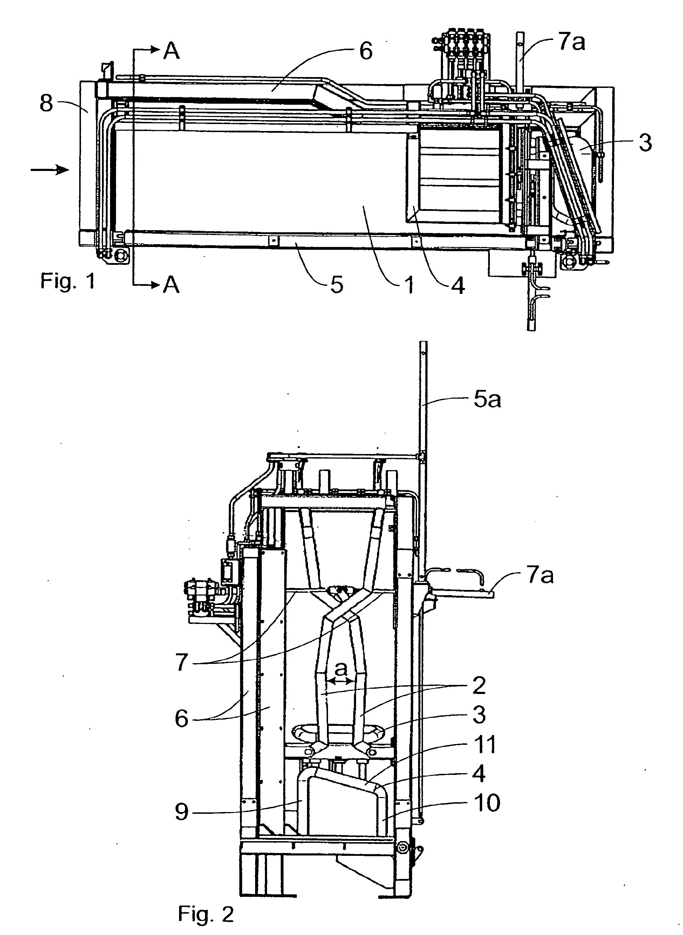

In the figures, the numeral 1 designates a shooting or stunning box which has a fixed wall 6 and a gate 5 which, as shown in fig. 2, may be raised or lowered by means of a cylinder 5a.

The box is of the structure described in the above-mentioned WO 03/047355, which has a driving gate which is movable to various positions in the box depending on the size of the animal, so that the neck area of the animal will be present at the hoops which are to fix the neck.

The driving gate may be moved by a system which operates in the same manner as the system according to DK Patent No. 174 938 B1, but where the gate may be moved to various stop positions in the box depending on the size of the animal, and where the gate is pulled aside from the box/walking area only after it has come outside the box during the return movement. Other structures are possible, just as it is possible to use a stationary sliding or raising gate which is arranged at the entrance to the box.

A gate 8 is arranged at one end of the box, which may be caused to close by displacement after an animal, which is to be killed or stunned, has been guided into the box, and the hoops have been closed around the neck, and the driving gate has been returned out of the box and been pulled aside from the walking area.

The floor of the box is horizontal during the driving-in and the shooting/stunning, but may be caused to be inclined downwards in a dirrection from the fixed wall 6 toward the gate 5 after the stunning/killing. The floor is terminated along its edge at the gate by a strip, which may be made of plastics. At the end of the box opposite the gate 8, a support plate 3 intended to support the head of an animal is arranged. Two hoops 2 are provided behind the support plate for fixing the neck of the animal, of which at least one, but preferably both, may be pivoted transversely in the box so as to create an opening of a width a. At the bottom, the hoops are rotatably secured to the wall 6 and the gate 5, respectively.

The movement of the hoops is performed by means of rods 7 which are connected at their one end with drive means 7a (e.g. hydraulic or pneumatic cylinders) and at their other end with the hoops 2.

Finally, an inclined sliding face 4 is arranged behind the hoops 2, which is configured as a hoop with two vertical posts 9, 10 connected at the top with a transversely extending crossbar 11 inclined toward the gate 5.

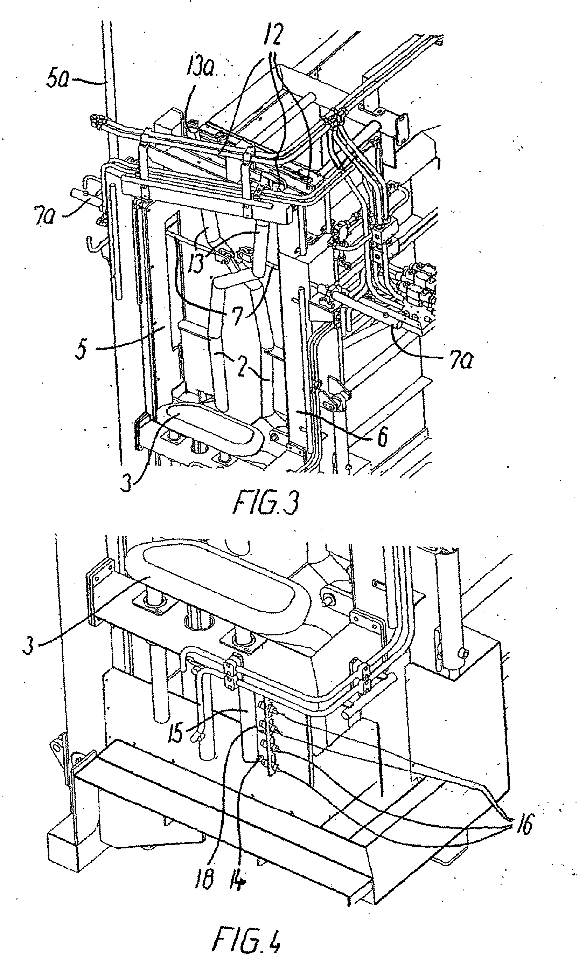

Fig. 3 and fig. 4 also show the hoops 2 and the support plate 3.

The hoops 2 are terminated at the top by an arm 13 whose upper free end 13a moves transversely when the drive means 7a move the arms 13. A signal generator (not shown) is mounted on the free end of the one arm on the side facing inwards toward the box. Four sensors 12 are arranged transversely in the box along the path of movement of this free end, and these sensors may be constructed as relays cooperating with the signal generator.

Three of these sensors define their respective active hoop positions, while the last one (the one shown farthest away from the signal generator on the free end 13a of the arm 13 in fig. 3) defines an open position of the hoops.

When a desired position of the hoops 2 is to be provided, the signal path is opened to one of the sensors 12, causing the drive means 7a to stop the movement of the hoops when the signal generator on the free end 13a has reached the sensor concerned. The hoops may hereby assume one of three active holding positions on the basis of a signal of the size of the animal (e.g. emitted by an operator in connection with the driving-in), or an open position on the basis of a signal to the effect that the hoops are to open.

Clearly, more or fewer than four sensors may be used.

Fig. 4 shows four other sensors 16 which are mutually positioned in a vertical direction. These sensors 16 are adapted to cooperate with a signal generator 14 arranged on the free end of a leg 15 which is secured to the support plate 3. The function of these sensors and the signal generator is the same as is explained in connection with fig. 3 concerning the signal generator on the arm 13 and the four sensors 12, i.e. they cause adjustment of the height of the plate in dependence on the size of the animal and adjust the plate so that it assumes a lower position when the animal moves into the box.

The sensors and the signal generators may be constructed in many ways. One possibility is to use a signal generator which emits a beam of light, and when the sensor receives the beam of light, stopping of the arm or the leg is initiated. Other signal generators and sensors may also be used, but since the principles of such signal generators/sensors are well-known, their structure will not be described in detail here.

It will now be explained how the killing/stunning of an animal takes place in the shooting box.

The animal is guided in past the open gate 8 and forwards in the box by means of the driving gate until the neck area is present at the hoops. Depending on how big the animal is, a controller, which is connected to the control automatics of the driving gate, adjusts the position of the hoops in response to the signal of the size of the animal (keyboard or determined automatically), so that the opening "a" has a suitable size, such that the neck of the animal may just be accommodated between the hoops.

Likewise, the height of the support plate 3 is determined automatically in dependence on the size of the animal so that the head of the animal may rest on it.

Normally, a given opening "a" will correspond to a specific height of the support plate so that, if the opening "a" is adjusted, the height of the support plate is adjusted automatically.

When the animal is arranged securely between the hoops, it is stunned or killed, following which the hoops are pulled apart from each other, and one side of the floor is raised so that the floor is inclined downwards toward the box side with the gate 5, which is raised by means of the cylinder 5a. The one hoop, which is secured to the gate, is raised together with the gate. The release causes the animal to slide rearwards, with the head down the inclined crossbar 11. The animal slides down the inclined floor and out below the gate 5 past the strip, so that, generally, it lands with the feet upwards in a position convenient for chaining. The support plate 3 prevents the animal from sliding forwards toward the end wall of the box.

Finally, the animal is chained in a hoisting and transport device (not shown), which advances it for further processing at the slaughterhouse.

As soon as the gate 5 is closed, the next animal may be guided into the box, and the process is repeated.

## Claims

1. An arrangement for fixing an animal in a shooting or stunning box, in which the neck of the animal is fixed between two movable hoops which, during the fixation, together define an opening between them for holding the neck, **characterized in that** the hoops are adjustable by their respective drive means to one of several predetermined lateral active holding positions to define one of various sizes of openings for holding the neck between the hoops.

2. An arrangement according to claim 1, **characterized in that** the hoops are adjusted to a specific lateral position on the basis of a signal from a controller, said signal being indicative of the size of the animal.

3. An arrangement according to claim 1, **characterized in that** the hoops are pivotally secured to their respective ones of the side walls of the stunning box.

4. An arrangement according to claim 3, **characterized in that** one side wall of the stunning box is formed by a gate which may be raised for the fall-out of a stunned animal.

5. An arrangement according to claims 1-4,**characterized in that** a support plate for the head of the animal is provided in the area in front of the movable hoops where the head of the animal is present during the fixation.

6. An arrangement according to claim 5, **characterized in that** the support plate is adjustable in the height, preferably to one of several predetermined positions.

7. An arrangement according to claims 1 - 6, **characterized in that** a transverse inclined sliding face is arranged behind the movable hoops, where the inclination of the sliding face has a direction toward a gate through which the animal, after having been killed/stunned, is to fall out, said inclined sliding face being preferably configured as a hoop in the form of a frame which is formed by two vertical posts connected at the top with an inclined crossbar.

8. An arrangement according to claims 1 - 7, **characterized in that** the floor in the box may be caused to assume an inclined position, where the inclination has a direction extending from a position above the foot of the one side wall, which is fixed, and down to the foot of the other side wall, which is formed by a gate.

9. An arrangement according to claims 3-8, **characterized in that** a longitudinal strip, preferably made of plastics, is arranged below the foot of the other side wall.

10. An arrangement according to claims 1 - 9, **characterized in that** the predetermined positions of the movable hoops are provided by means of several sensors, which, when they receive a signal from a signal generator, may be set in a state in which they are adapted to stop the drive means of the movable hoops.

11. An arrangement according to claims 3 - 10, **characterized in that** the positions of the support plate are provided by sensors, which, when they receive a signal from a signal generator, may be set in a state in which they are adapted to stop the movement of the support plate.

12. An arrangement according to claims 1 - 11, **characterized in that** the adjustments of the positions of the hoops and of the positions of the support plate are interrelated such that a given position of a movable hoop corresponds to a given position of the support plate.

## Patentansprüche

1. Anordnung zum Fixieren eines Tiers in einer Schieß- oder Betäubungsbox, wobei der Hals des Tiers zwischen zwei beweglichen Bügeln fixiert wird, die während der Fixierung zwischen einander gemeinsam eine Öffnung zum Halten des Halses definieren, **dadurch gekennzeichnet, dass** die Bügel durch ihr jeweiliges Antriebsmittel in eine von mehreren vorbestimmten seitlichen aktiven Haltepositionen einstellbar sind, um eine von verschiedenen Öffnungsgrößen zum Halten des Halses zwischen den Bügeln zu definieren.

2. Anordnung nach Anspruch 1, **dadurch gekennzeichnet, dass** die Bügel auf Basis eines Signals von einer Steuerung in eine bestimmte seitliche Position einstellbar sind, wobei das Signal die Größe des Tiers anzeigt.

3. Anordnung nach Anspruch 1, **dadurch gekennzeichnet, dass** die Bügel schwenkbar an ihren jeweiligen Seitenwänden der Betäubungsbox befestigt sind.

4. Anordnung nach Anspruch 3, **dadurch gekennzeichnet, dass** eine Seitenwand der Betäubungsbox durch ein Gatter gebildet ist, das zwecks Herausfallen eines betäubten Tiers angehoben werden kann.

5. Anordnung nach Ansprüchen 1 - 4, **dadurch gekennzeichnet, dass** eine Stützplatte für den Kopf des Tiers in dem Bereich vor den beweglichen Bügeln vorgesehen ist, in dem sich der Kopf des Tiers während der Fixierung befindet.

6. Anordnung nach Anspruch 5, **dadurch gekennzeichnet, dass** die Stützplatte in der Höhe einstellbar ist, vorzugsweise in eine von mehreren vorbestimmten Positionen.

7. Anordnung nach Ansprüchen 1-6, **dadurch gekennzeichnet, dass** eine transverse geneigte Gleitfläche hinter den beweglichen Bügeln angeordnet ist, wobei die Neigung der Gleitfläche eine Richtung auf ein Gatter hin aufweist, durch das das Tier, nachdem es getötet/betäubt wurde, herausfallen soll, wobei die geneigte Gleitfläche vorzugsweise als Bügel in der Form eines Rahmens konfiguriert ist, der durch zwei vertikale Stäbe gebildet ist, die oben mit einer geneigten Querstange verbunden sind.

8. Anordnung nach Ansprüchen 1 - 7, **dadurch gekennzeichnet, dass** bewirkt werden kann, dass der Boden in der Box eine geneigte Position einnimmt, wobei die Neigung eine Richtung aufweist, die sich von einer Position über der Basis der einen Seitenwand, die fest ist, und nach unten zu der Basis der anderen Seitenwand, die durch ein Gatter gebildet wird, erstreckt.

9. Anordnung nach Ansprüchen 3 - 8, **dadurch gekennzeichnet, dass** ein Längsstreifen, vorzugsweise aus Kunststoffhergestellt, unter der Basis der andere Seitenwand angeordnet ist.

10. Anordnung nach Ansprüchen 1-9, **dadurch gekennzeichnet, dass** die vorbestimmten Positionen der beweglichen Bügel mittels mehrerer Sensoren vorgesehen sind, die, wenn sie ein Signal von einem Signalerzeuger empfangen, in einen Zustand versetzt werden können, in dem sie angepasst sind, um die Antriebsmittel der beweglichen Bügel anzuhalten.

11. Anordnung nach Ansprüchen 3 - 10, **dadurch gekennzeichnet, dass** die Positionen der Stützplatte durch Sensoren vorgesehen sind, die, wenn sie ein Signal von einem Signalerzeuger empfangen, in einen Zustand versetzt werden können, in dem sie angepasst sind, um die Bewegung der Stützplatte anzuhalten.

12. Anordnung nach Ansprüchen 1-11, **dadurch gekennzeichnet, dass** die Einstellungen der Positionen der Bügel und der Positionen der Stützplatte so zusammenhängen, dass eine vorgegebene Position eines beweglichen Bügels einer vorgegebenen Position der Stützplatte entspricht.

## Revendications

1. Dispositif pour maintenir un animal dans un box d'abattage ou d'étourdissement, dans lequel le cou de l'animal est fixé entre deux arceaux mobiles qui, pendant la fixation, définissent ensemble une ouverture entre elles pour maintenir le cou, **caractérisé en ce que** les arceaux sont réglables par leur moyen de commande respectif dans une parmi plusieurs positions de maintien latéral prédéterminées afin de définir une parmi diverses tailles d'ouvertures pour maintenir le cou entre les arceaux.

2. Dispositif selon la revendication 1, **caractérisé en ce que** les arceaux sont réglés selon une position latérale spécifique sur la base d'un signal venant d'un dispositif de commande, ledit signal indiquant la taille de l'animal.

3. Dispositif selon la revendication 1, **caractérisé en ce que** les arceaux sont fixés de manière pivotante à leurs parois respectives parmi les parois latérales du box d'étourdissement.

4. Dispositif selon la revendication 3, **caractérisé en ce qu'**une paroi latérale du box d'étourdissement est formée par une porte qui peut être soulevée pour la sortie de l'animal étourdi.

5. Dispositif selon les revendications 1 à 4, **caractérisé en ce qu'**une plaque de support pour la tête de l'animal est prévue dans la zone devant les arceaux mobiles où la tête de l'animal est présente pendant la fixation.

6. Dispositif selon la revendication 5, **caractérisé en ce que** la plaque de support est réglable en hauteur, de préférence dans une parmi plusieurs positions prédéterminées.

7. Dispositif selon les revendications 1 à 6, **caractérisé en ce qu'**une face coulissante inclinée de manière transversale est agencée derrière les arceaux mobiles, l'inclinaison de la face coulissante ayant une direction vers une porte à travers laquelle l'animal, après avoir été abattu/étourdi, doit sortir, ladite face coulissante inclinée étant de préférence configurée comme un arceau sous la forme d'un cadre qui est formé par deux montants verticaux reliés en haut par une traverse inclinée.

8. Dispositif selon les revendications 1 à 7, **caractérisé en ce que** le sol dans le box peut être agencé de manière à prendre une position inclinée, l'inclinaison ayant une direction s'étendant d'une position au-dessus du pied de la première paroi latérale, qui est fixe, et descendant jusqu'au pied de l'autre paroi latérale, qui est formée par une porte.

9. Dispositif selon les revendications 3 à 8, **caractérisé en ce qu'**une bande longitudinale, de préférence en plastique, est agencée au-dessous du pied de l'autre paroi latérale.

10. Dispositif selon les revendications 1 à 9, **caractérisé en ce que** les positions prédéterminées des arceaux mobiles sont fournies au moyen de plusieurs capteurs, qui, lorsqu'ils reçoivent un signal d'un générateur de signaux, peuvent être agencés dans un état dans lequel ils sont adaptés pour arrêter les moyens de commande des arceaux mobiles.

11. Dispositif selon les revendications 3 à 10, **caractérisé en ce que** les positions de la plaque de support sont déterminées par des capteurs, qui, lorsqu'ils reçoivent un signal d'un générateur de signaux, peuvent être agencés dans un état dans lequel ils sont adaptés pour arrêter le mouvement de la plaque de support.

12. Dispositif selon les revendications 1 à 11, **caractérisé en ce que** les réglages des positions des arceaux et des positions de la plaque de support sont interreliés de sorte qu'une position donnée d'un arceau mobile corresponde à une position donnée de la plaque de support.
